# EUROPÄISCHE PATENTSCHRIFT

(11) **EP 2 333 923 B1**
(45) Veröffentlichungstag und Bekanntmachung des Hinweises auf die Patenterteilung: **07.05.2014**
(21) Anmeldenummer: 10014430.2
(22) Anmeldetag: 10.11.2010
(51) Int. Cl.: H02G 3/12, H02G 3/08

(54) **Montagekonzept für Unterputz-Installationsmaterial**
Fitting concept for built-in installation material
Concept de montage pour matériau d'installation encastré

(30) Priorität: 11.12.2009 DE 102009057940
(43) Veröffentlichungstag der Anmeldung: 15.06.2011
(73) Patentinhaber: ABB AG, 68309 Mannheim (DE)
(72) Erfinder: Stumpf, Ingo, 58509 Lüdenscheid (DE); Kückelhaus, Dirk, 58339 Breckerfeld (DE); Schulte-Lippern, Günter Dipl.-Ing., 58513 Lüdenscheid (DE); Ewers, Manfred Dipl.-Ing., 58239 Schwerte (DE)

(56) Entgegenhaltungen:
- EP-A1- 1 096 631
- EP-A2- 0 722 208

## Beschreibung

Die Erfindung betrifft ein Montagekonzept für Unterputz-Installationsmaterial und kann allgemein bei für den Wandeinbau geeigneten Unterputz-Installationsschaltern, Unterputz-Tastern, Unterputz-Dimmern, Unterputz-Steckdosen, Unterputz-Jalousieschaltern, Unterputz-Raumtemperaturreglern, Unterputz-Antennensteckdosen, Unterputz-Telekommunikationsanschlusseinheiten, Unterputz-Tastsensoren / Bedienelementen usw. Anwendung finden, wie in EP 1 096 631.

Bei Unterputz-Installationsmaterial respektive UP-Installationsmaterial werden üblicherweise UP-Installationsgeräte in handelsübliche 60mm-UP-Gerätedosen nach DIN 49073 montiert, wobei jedes einzelne UP-Installationsgerät einen separaten Tragring aufweist und in eine einzelne UP-Gerätedose eingesetzt wird. Hierbei ist bei Mehrfachkombinationen darauf zu achten, dass die einzelnen UP-Installationsgeräte exakt zueinander ausgerichtet sind. Hierzu sind als Hilfestellungen an den einzelnen Tragringen häufig Markierungen oder "Nasen" angebracht. Insgesamt ist das Ausrichten der einzelnen UP-Installationsgeräte problematisch, d. h. die exakte Zuordnung horizontal / vertikal nebeneinander ohne jeden seitlichen Versatz und mit exaktem Abstand - ohne Überlappung einerseits und ohne Spalt zwischen zwei Tragringen andererseits.

Werden die UP-Installationsgeräte nicht exakt zueinander ausgerichtet, kann dies des Weiteren zu Problemen bei der Montage des Mehrfachrahmens und der Zentralscheiben führen, da eine Zentralscheibe einerseits durch den UP-Einsatz fixiert wird, andererseits aber genau in den Ausschnitt des Mehrfachrahmens passen muss. Bei nicht exakter Ausrichtung können ungleichmäßige Spaltbreiten zwischen Zentralscheibe und Mehrfachrahmen entstehen, die zum Einen ein gewünschtes gefälliges Gesamtbild beeinträchtigen und zum Anderen, beispielsweise bei beweglichen Schalterwippen, zu Funktionsbeeinträchtigungen (Klemmen, schwergängige Betätigung) führen können.

Der Erfindung liegt die Aufgabe zugrunde, ein Montagekonzept für Unterputz-Installationsmaterial anzugeben, welches die Montagemöglichkeit von Mehrfachkombinationen verbessert.

Diese Aufgabe wird erfindungsgemäß gelöst durch ein Montagekonzept für Unterputz-Installationsmaterial
- mit einem metallenen Mehrfach-Tragring mit mindestens zwei nebeneinander angeordneten, standardisierten Ausnehmungen zur Aufnahme von mindestens zwei nebeneinander angeordneten, standardisierten UP-Einsätzen, wie Schalter-Einsätzen, Taster-Einsätzen, Steckdosen-Einsätzen und Dimmer-Einsätzen usw.,
- wobei der Mehrfach-Tragring mindestens zwei Federspreizen-Paare für die Montage in mindestens zwei nebeneinander angeordneten, handelsüblichen UP-Gerätedosen aufweist und
- wobei die standardisierten UP-Einsätze jeweils lösbar mit dem Mehrfach-Tragring verbunden sind.

Dabei umfasst der Ausdruck "nebeneinander" sowohl ein horizontales als auch ein vertikales "Nebeneinander" von standardisierten Ausnehmungen / UP-Einsätzen / UP-Gerätedosen.

Die mit der Erfindung erzielbaren Vorteile liegen insbesondere darin, dass aufgrund des vorgeschlagenen Montagekonzeptes keine Probleme mehr beim Ausrichten von einzelnen UP-Installationsgeräten auftreten können, da stets die exakte Zuordnung horizontal / vertikal nebeneinander durch den Mehrfach-Tragring quasi "automatisch" und fest vorgegeben ist. Die Zentralscheibe passt stets genau in den Ausschnitt des Mehrfachrahmens und es entstehen gleichmäßige Spaltbreiten zwischen Zentralscheibe und Mehrfachrahmen. Hierdurch wird zum Einen das gewünschte gefällige Gesamtbild erzielt und zum Anderen werden Funktionsbeeinträchtigungen (Klemmen, schwergängige Betätigung), beispielsweise bei beweglichen Schalterwippen, zuverlässig verhindert.

Darüber hinaus können im Vergleich zur konventionellen Technik mit Einzel-Tragringen je UP-Installationsgerät die Abstände zwischen den einzelnen UP-Installationsgeräten verringert werden, was insgesamt zu einem kompakteren Aufbau führt.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: eine perspektivische Ansicht eines mit mehreren standardisierten UP-Einsätzen bestückten Mehrfach-Tragrings,
- Fig. 2: eine perspektivische Ansicht eines Mehrfach-Tragrings mit den jeweils zugeordneten, standardisierten UP-Einsätzen,
- Fig. 3, 4: perspektivische Detailansichten zur Erläuterung der Rastmittel vor und nach der Montage eines standardisierten UP-Einsatzes im Mehrfach-Tragring,
- Fig. 5, 6: perspektivische Detailansichten der Frontseite und der Rückseite zur Erläuterung einer Verschraubung zwischen einem standardisierten UP-Einsatz und dem Mehrfach-Tragring,
- Fig. 7: eine perspektivische Ansicht eines unbestückten Mehrfach-Tragrings.

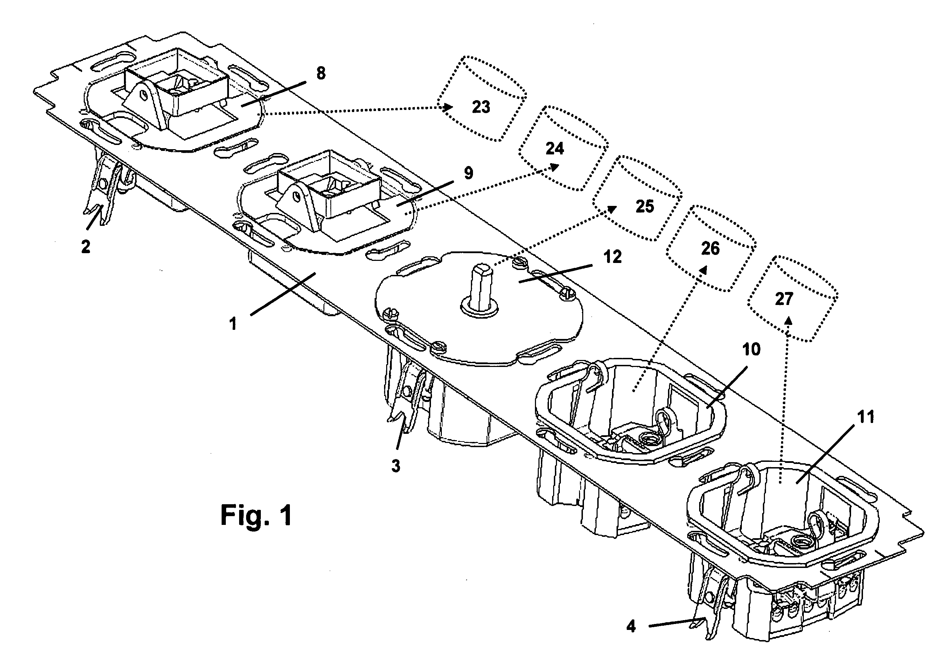

In Fig. 1 ist eine perspektivische Ansicht eines mit mehreren standardisierten UP-Einsätzen bestückten Mehrfach-Tragrings dargestellt. Es ist ein zur Montage von fünf standardisierten UP-Einsätzen geeigneter, aus Blech gefertigter Mehrfach-Tragring 1 zu erkennen, in welchem
- ein einer ersten UP-Gerätedose 23 zugeordneter Schalter-Einsatz 8 als erster standardisierter UP-Einsatz,
- ein einer zweiten UP-Gerätedose 24 zugeordneter Schalter-Einsatz 9 als zweiter standardisierter UP-Einsatz,
- ein einer dritten UP-Gerätedose 25 zugeordneter Dimmer-Einsatz 12 als dritter standardisierter UP-Einsatz,
- ein einer vierten UP-Gerätedose 26 zugeordneter Stechdosen-Einsatz 10 als vierter standardisierter UP-Einsatz,
- ein einer fünften UP-Gerätedose 27 zugeordneter Steckdosen-Einsatz 11 als fünfter standardisierte UP-Einsatz
installiert sind. Für die Installation dieser UP-Einsätze in den einzelnen UP-Gerätedosen ist es nicht erforderlich, dass jeder standardisierte UP-Einsatz 8, 9, 10, 11, 12 mit einem eigenen Federspreizen-Paar versehen ist, es genügt stattdessen, dass der Mehrfach-Tragring 1, hier beispielsweise ein Fünffach-Tragring, z. B. drei symmetrisch verteilte Federspreizen-Paare 2 bzw. 3 bzw. 4 zur Befestigung in der ersten bzw. dritten bzw. fünften UP-Gerätedose 23 bzw. 25 bzw. 27 aufweist.

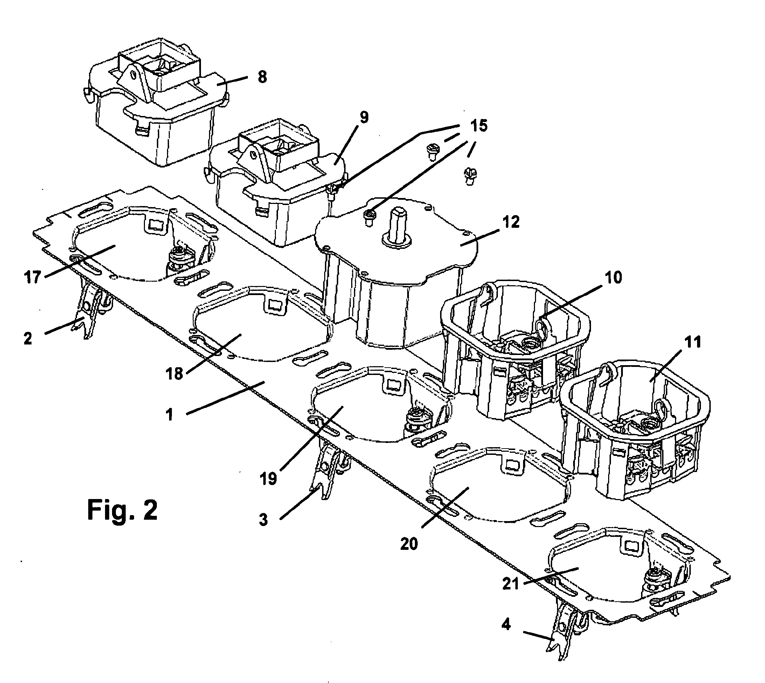

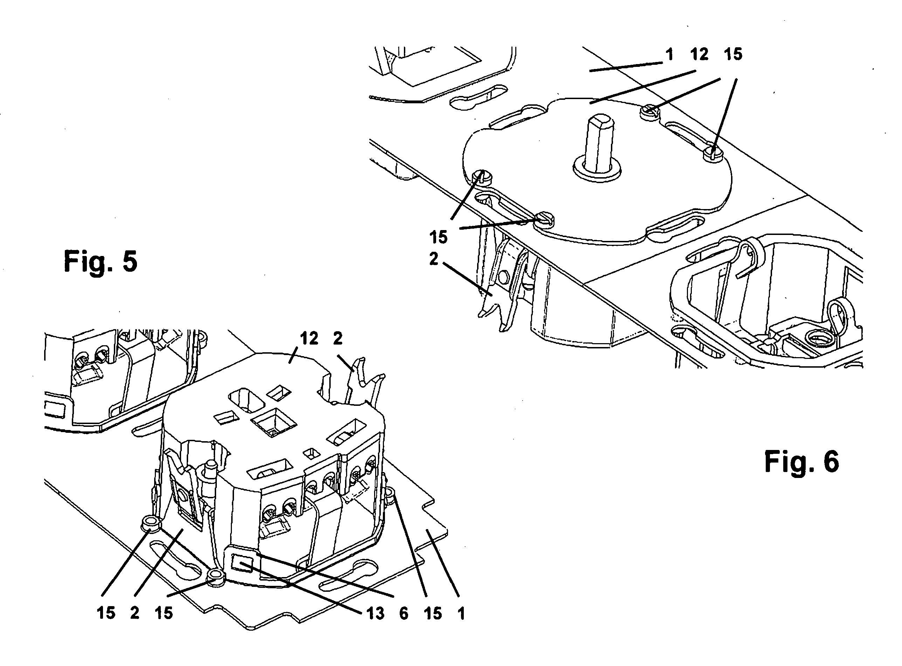

In Fig. 2 ist in Ergänzung zur Fig. 1 eine perspektivische Ansicht eines Mehrfach-Tragrings mit den jeweils zugeordneten, standardisierten UP-Einsätzen dargestellt. Dabei ist zu erkennen, dass der Mehrfach-Tragring 1 fünf standardisierte Ausnehmungen 17, 18, 19, 20, 21 aufweist, wobei die erste standardisierte Ausnehmung 17 zur Aufnahme des Schalter-Einsatzes 8, die zweite standardisierte Ausnehmung 18 zur Aufnahme des Schalter-Einsatzes 9, die dritte standardisierte Ausnehmung 19 zur Aufnahme des Dimmer-Einsatzes 12, die vierte standardisierte Ausnehmung 20 zur Aufnahme des Steckdosen-Einsatzes 10 und die fünfte standardisierte Ausnehmung 21 zur Aufnahme des Steckdosen-Einsatzes 11 vorgesehen ist. Dabei ist bereits angedeutet, dass die Befestigung zwischen einem standardisierten UP-Einsatz und dem Mehrfach-Tragring 1 über Schrauben 15, allgemein über lösbare Befestigungsmittel, erfolgen kann. Nähere Erläuterungen hierzu unter den Figuren 5 und 6. Eine einfachere Art und Weise der Befestigung zwischen einem standardisierten UP-Einsatz und dem Mehrfach-Tragring 1 erfolgt jedoch mittels Rastmittel als lösbare Befestigungsmittel, wie nachfolgend erläutert.

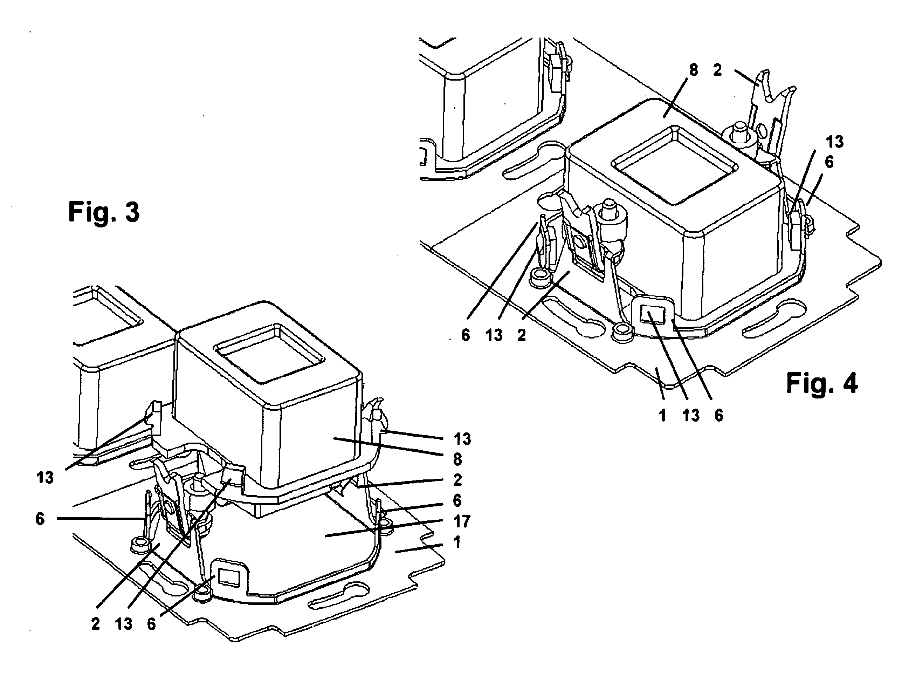

In den Figuren 3 und 4 sind perspektivische Detailansichten zur Erläuterung der Rastmittel vor (siehe Fig. 3) und nach (siehe Fig. 4) der Montage eines standardisierten UP-Einsatzes im Mehrfach-Tragring dargestellt. Für die Verrastung zwischen einem standardisierten UP-Einsatz, hier z. B. Schalter-Einsatz 8, und dem Mehrfach-Tragring 1 sind einerseits mehrere Rastösen 6, vorzugsweise vier symmetrisch verteilte Rastösen, randseitig der standardisierte Ausnehmung, hier standardisierte Ausnehmung 17, vorgesehen und andererseits ist der standardisierte UP-Einsatz mit korrespondierend hierzu angeordneten Rastnasen 13 versehen. Die "schiefen Ebenen" dieser Rastnasen 13 sind derart ausgebildet, dass ein Aufsetzen der Rastnasen 13 des standardisierten UP-Einsatzes auf die Rastösen 6 von der Frontseite des Mehrfach-Tragrings 1 her einfach möglich ist. Bei Ausübung von Druck auf den standardisierten UP-Einsatz in Richtung zur Wand gleiten die Rastnasen 13 entlang der Rastösen 6, wobei die Rastnasen 13 in Richtung Zentrum der standardisierten Ausnehmung federnd gedrückt werden. In den Endpositionen verrasten die Rastnasen 13 unter Zurückfedern in den Rastösen 6, wie dies in Fig. 4 zu erkennen ist.

In den Figuren 5 und 6 sind perspektivische Detailansichten der Frontseite (siehe Fig. 6) und der Rückseite (siehe Fig. 5) zur Erläuterung einer Verschraubung zwischen einem standardisierten UP-Einsatz und dem Mehrfach-Tragring dargestellt. Diese Verschraubung kann zusätzlich oder alternativ zur gemäß den Figuren 3, 4 erläuterten Verrastung Rastösen 6 / Rastnasen 13 erfolgen. Für die Verschraubung ist der Mehrfach-Tragring 1 jeweils randseitig der standardisierten Ausnehmungen 17, 18, 19, 20, 21 mit Gewindebohrungen 5 versehen, vorzugsweise mit vier Gewindebohrungen pro standardisierte Ausnehmung. Der zu verschraubende, standardisierte UP-Einsatz, hier Dimmer-Einsatz 12, weist in seiner Frontplatte Bohrungen auf, durch welche Schrauben 15 eingeführt und mit den Gewindebohrungen 5 verschraubt werden können. Das Anschrauben ist insbesondere dann vorteilhaft, wenn, beispielsweise bei einem Dimmer, eine Wärmeabfuhr von während des Betriebes des standardisierten UP-Einsatzes erzeugter Verlustwärme zum Mehrfach-Tragring 1 erfolgen soll. Beim in den Figuren 1 und 2 gezeigten Ausführungsbeispiel ist lediglich ein einziger Dimmer neben Schalter-Einsätzen und Steckdosen-Einsätzen vorgesehen. Vorteilhaft kann sich bei einer solchen Konfiguration die über den Dimmer eingebrachte Verlustwärme über den gesamten, sich über fünf standardisierte UP-Einsätze erstreckenden Mehrfach-Tragring 1 verteilen.

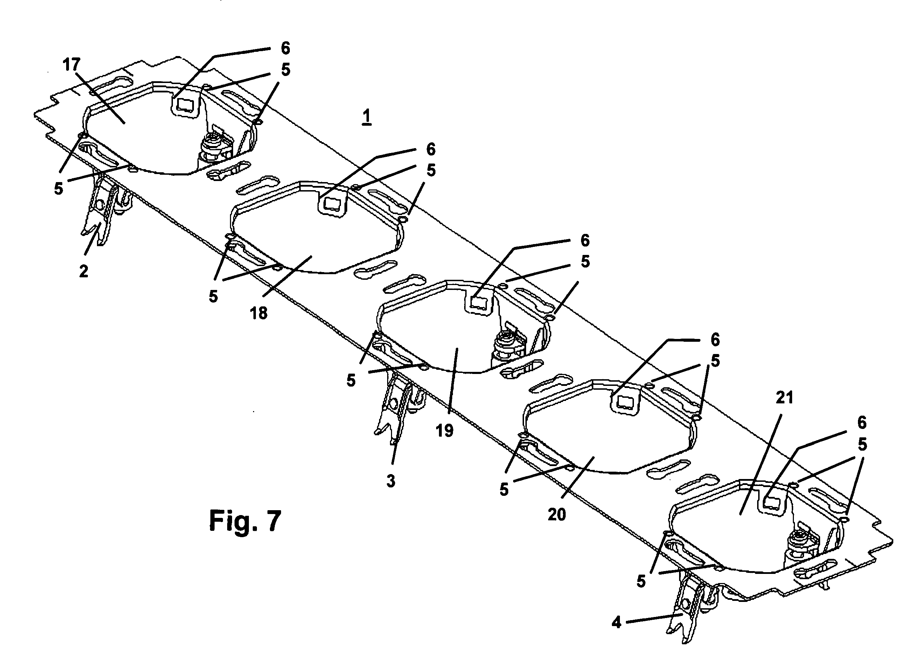

In Fig. 7 ist eine perspektivische Ansicht eines unbestückten Mehrfach-Tragrings dargestellt. Es sind die fünf standardisierte Ausnehmungen 17, 18, 19, 20, 21 des Mehrfach-Tragrings 1 zu erkennen, wobei jeweils unmittelbar am Rand einer jeden standardisierten Ausnehmung und rechtwinklig zur Hauptfläche des Mehrfach-Tragrings 1 abgewinkelt mehrere Rastösen 6 vorgesehen sind, während die vorstehend bereits erwähnten Gewindebohrungen 5 in die Hauptfläche des Mehrfach-Tragrings 1 selbst eingearbeitet sind.

Selbstverständlich ist der dargestellte und erläuterte Mehrfach-Tragring 1 mit fünf standardisierten Ausnehmungen 17, 18, 19, 20, 21 zur Installation von fünf standardisierten UP-Einsätzen 8, 9, 10, 11, 12 nur ein Ausführungsbeispiel von mehreren Möglichkeiten, quasi ein Fünffach-Tragring. In gleicher Art und Weise sind Zweifach-Tragringe, Dreifach-Tragringe, Vierfach-Tragringe, Sechsfach-Tragringe usw. realisierbar.

Mit "standardisiert" wird dabei ausgedrückt, dass es im Sinne eines Baukastensystems in beliebiger Art und Weise möglich ist, die Mehrfach-Tragringe mit gewünschten unterschiedlichen UP-Einsätzen zu bestücken, d. h. Innendurchmesser der standardisierten Ausnehmungen, Außendurchmesser der unterschiedlichen, standardisierten UP-Einsätze und lösbare Befestigungsmittel (Rastösen / Rastnasen und/oder Gewindebohrungen / Schrauben) sind stets aufeinander abgestimmt.

Selbstverständlich wird die vorstehend erläuterte Mehrfachkombination komplettiert durch Zentralscheiben für die einzelnen UP-Einsätze und durch Mehrfachrahmen, z. B. Zweifach-Rahmen, Dreifach-Rahmen, Vierfach-Rahmen, Fünffach-Rahmen usw., wodurch ein in vielfältiger Weise ausgestaltbares Unterputz-Steckdosen/Schalter-Programm geschaffen und zur Verfügung gestellt wird.

### Bezugszeichenliste

- 1: Mehrfach-Tragring (aus Blech gebildet)
- 2: Federspreizen-Paar
- 3: Federspreizen-Paar
- 4: Federspreizen-Paar
- 5: Gewindebohrungen
- 6: Rastösen
- 7: -
- 8: Schalter-Einsatz als standardisierter UP-Einsatz
- 9: Schalter-Einsatz als standardisierter UP-Einsatz
- 10: Steckdosen-Einsatz als standardisierter UP-Einsatz
- 11: Steckdosen-Einsatz als standardisierter UP-Einsatz
- 12: Dimmer-Einsatz als standardisierter UP-Einsatz
- 13: Rastnasen
- 14: -
- 15: Schrauben
- 16: -
- 17: standardisierte Ausnehmung
- 18: standardisierte Ausnehmung
- 19: standardisierte Ausnehmung
- 20: standardisierte Ausnehmung
- 21: standardisierte Ausnehmung
- 22: -
- 23: UP-Gerätedose
- 24: UP-Gerätedose
- 25: UP-Gerätedose
- 26: UP-Gerätedose
- 27: UP-Gerätedose

## Patentansprüche

1. Montagekonzept für Unterputz-Installationsmaterial
mit einem metallenen Mehrfach-Tragring (1) mit mindestens zwei nebeneinander angeordneten, standardisierten Ausnehmungen (17, 18, 19, 20, 21) zur Aufnahme von mindestens zwei nebeneinander angeordneten, standardisierten UP-Einsätzen (8, 9, 10, 11, 12), wie Schalter-Einsätzen, Taster-Einsätzen, Steckdosen-Einsätzen und Dimmer-Einsätzen usw.,
wobei die standardisierten UP-Einsätze (8, 9, 10, 11, 12 jeweils lösbar mit dem Mehrfach-Tragring (1) verbunden sind, **dadurch gekennzeichnet dass** der Mehrfach-Tragring (1) mindestens zwei Federspreizen-Paare (2, 3, 4) für die Montage in mindestens zwei nebeneinander angeordneten, handelsüblichen UP-Gerätedosen (23, 24, 25, 26, 27) aufweist.

2. Montagekonzept nach Anspruch 1, **dadurch gekennzeichnet, dass** zur Umsetzung der lösbaren Befestigung die standardisierten Ausnehmungen (17, 18, 19, 20, 21) randseitig mit mehreren Rastösen (6) versehen sind und dass die standardisierten UP-Einsätze (8, 9, 10, 11, 12) mit hierzu korrespondierenden und zum Eingriff in die Rastösen (6) geeigneten Rastnasen (13) ausgerüstet sind.

3. Montagekonzept nach Anspruch 1 oder 2, **dadurch gekennzeichnet, dass** zur Umsetzung der lösbaren Befestigung der Mehrfach-Tragring (1) mit mehreren Gewindebohrungen (5) nahe der standardisierten Ausnehmungen (17, 18, 19, 20, 21) versehen ist und dass die standardisierten UP-Einsätze (8, 9, 10, 11, 12) Bohrungen aufweisen, durch welche Schrauben (15) einführbar und mit diesen Gewindebohrungen (5) verschraubbar sind.

## Claims

1. Fitting concept for flush-mounted installation material
comprising a metallic multiple supporting ring (1) with at least two standardized clearances (17, 18, 19, 20, 21), arranged next to one another, for receiving at least two standardized flush-mounted inserts (8, 9, 10, 11, 12), arranged next to one another, such as switch inserts, button inserts, plug-socket inserts and dimmer inserts, etc.,
the standardized flush-mounted inserts (8, 9, 10, 11, 12) respectively being detachably connected to the multiple supporting ring (1), **characterized in that** the multiple supporting ring (1) has at least two pairs of expanding spring clips (2, 3, 4) for fitting in at least two commercially available flush-mounted device sockets (23, 24, 25, 26, 27), arranged next to one another.

2. Fitting concept according to Claim 1, **characterized in that**, for the implementation of the detachable fastening, the standardized clearances (17, 18, 19, 20, 21) are provided at the periphery with multiple locking eyelets (6) and **in that** the standardized flush-mounted inserts (8, 9, 10, 11, 12) are equipped with locking lugs (13) corresponding thereto and suitable for engagement in the locking eyelets (6).

3. Fitting concept according to Claim 1 or 2, **characterized in that**, for the implementation of the detachable fastening, the multiple supporting ring (1) is provided with multiple threaded bores (5) near the standardized clearances (17, 18, 19, 20, 21) and **in that** the standardized flush-mounted inserts (8, 9, 10, 11, 12) have bores through which screws (15) can be inserted and screwed together with these threaded bores (5).

## Revendications

1. Concept de montage pour matériau d'installation encastré comprenant un anneau de support multiple métallique (1) comprenant au moins deux évidements standardisés disposés l'un à côté de l'autre (17, 18, 19, 20, 21) pour recevoir au moins deux inserts encastrés standardisés disposés l'un à côté de l'autre (8, 9, 10, 11, 12), tels que des inserts de commutateurs, des inserts de touches, des inserts de prises femelles, des inserts de gradateurs, etc.,
les inserts encastrés standardisés (8, 9, 10, 11, 12) étant à chaque fois connectés de manière détachable à l'anneau de support multiple (1), **caractérisé en ce que** l'anneau de support multiple (1) présente au moins deux paires de pinces d'écartement à ressort (2, 3, 4) pour le montage dans au moins deux boîtes d'appareils encastrées (23, 24, 25, 26, 27) usuelles dans le commerce et disposées l'une à côté de l'autre.

2. Concept de montage selon la revendication 1, **caractérisé en ce que** pour la réalisation de la fixation détachable, les évidements standardisés (17, 18, 19, 20, 21) sont munis, au niveau des bords, de plusieurs oeillets d'encliquetage (6) et **en ce que** les inserts encastrés standardisés (8, 9, 10, 11, 12) sont munis d'ergots d'encliquetage (13) correspondants à cet effet et appropriés pour s'engager dans les oeillets d'encliquetage (6).

3. Concept de montage selon la revendication 1 ou 2, **caractérisé en ce que** pour la réalisation de la fixation détachable, l'anneau de support multiple (1) est pourvu de plusieurs alésages filetés (5) à proximité des évidements standardisés (17, 18, 19, 20, 21) et **en ce que** les inserts encastrés standardisés (8, 9, 10, 11, 12) présentent des alésages à travers lesquels peuvent être introduites des vis (15) qui peuvent être vissées avec ces alésages filetés (5).
